Europäisches Patentamt

European Patent Office

Office européen des brevets

(11) Publication number: **0 086 603**
**B1**

(12) **EUROPEAN PATENT SPECIFICATION**

(45) Date of publication of patent specification: **19.11.87**

(21) Application number: **83300565.5**

(22) Date of filing: **04.02.83**

(51) Int. Cl.⁴: **B 62 K 25/00**

(54) **Two-wheeled vehicles.**

(30) Priority: **17.02.82 JP 24181/82**

(43) Date of publication of application:
**24.08.83 Bulletin 83/34**

(45) Publication of the grant of the patent:
**19.11.87 Bulletin 87/47**

(84) Designated Contracting States:
**DE FR GB IT**

(56) References cited:
**EP-A-0 078 639**
**DE-C- 684 686**
**FR-A- 890 247**
**FR-A- 985 372**
**US-A-1 371 783**
**US-A-4 159 752**

(73) Proprietor: **HONDA GIKEN KOGYO KABUSHIKI KAISHA**
**27-8, Jingumae, 6-chome**
**Shibuya-ku, Tokyo 150 (JP)**

(72) Inventor: **Satoh, Kazuo**
**3-23-3, Higashi-Mizuhodai**
**Fukimi-shi Saitama (JP)**

(74) Representative: **MacFarlane, John Anthony Christopher et al**
**HASELTINE LAKE & CO. Hazlitt House 28, Southampton Buildings Chancery Lane London WC2A 1AT (GB)**

Courier Press, Leamington Spa, England.

## Description

This invention relates to two-wheeled vehicles, and in particular to a two-wheeled vehicle in which a body structure of the vehicle has its centre of gravity disposed to one side or the other of the fore and aft centre line of the vehicle.

Two-wheeled vehicles generally include a steering assembly that includes a handlebar and a front fork that supports a front wheel, and a body assembly that includes a frame and a rider's seat that supports a rear wheel. The steering assembly is connected with the body assembly about a pivot axis so as to be capable of steering operation, a front fork being pivotally supported by a head pipe secured to the front end of the frame. In order to secure straight running of the vehicle, the head pipe and the front fork have their common axis inclined with respect to the vertical, that is, the front fork which carries at its lower end a shaft of the front wheel has a caster angle. In such a vehicle it can be the case that the centre of gravity of the body assembly is disposed to one side or the other of the fore and aft centre line of the vehicle, this centre line passing through the head pipe. Such positioning of the centre of gravity occurs, for example, in motor-driven two-wheeled vehicles in which a power unit including the engine as a constituent part thereof is disposed on one side or the other of the rear wheel. As a result of such positioning of the centre of gravity the vehicle tends to fall towards the side on which the centre of gravity is disposed. It has been proposed to counteract this tendency by so-called "cut-in-motion" of the steering assembly. By utilising cut-in motion, a twisting force is caused due to the caster angle to act on the body assembly to exert a raising-up action on the body assembly that opposes the tilting effect of the offset position of the centre of gravity, and thus the dynamic balance of the vehicle is preserved during running of the vehicle. However, this is achieved with the whole of the two-wheeled vehicle running in a position inclined with respect to the vertical, if only a little, when running straight ahead. Also it is proposed, in EP—A— 0 078 639, prior art within the terms of Article 54(3), to provide a two-wheeled vehicle comprising a body assembly (5) having its centre of gravity (G1) offset to one side of the fore and aft centre line (N1—N1) of the vehicle, a steering assembly (4) pivotally connected to the body assembly (5), a front wheel (1) supported by the steering assembly (4), and a rear wheel (6) supported by the body assembly (5), the front wheel (1) being offset with respect to the fore and aft centre line (N1—N1) on the side opposite the centre of gravity (G1).

According to the present invention there is provided a two-wheeled vehicle comprising a body assembly having its centre of gravity offset to one side or the other of the fore and aft centre line of the vehicle, a steering assembly pivotally connected to the body assembly, a front wheel supported by the steering assembly, and a rear wheel supported by the vehicle body assembly, characterised in that the rear wheel is offset with respect to said fore and aft centre line on the same side as said centre of gravity.

By such offsetting of the rear wheel, or of the front wheel and the rear wheel, the vehicle is able to run straight ahead in a substantially upright position.

For a better understanding of the invention and to show how the same may be carried into effect, reference will now be made, by way of example, to the accompanying drawings, in which:—

Figure 1 is a side view of a two-wheeled vehicle,

Figure 2 is a front view of the two-wheeled vehicle of Figure 1, and

Figure 3 is a schematic plan view of the two-wheeled vehicle of Figures 1 and 2.

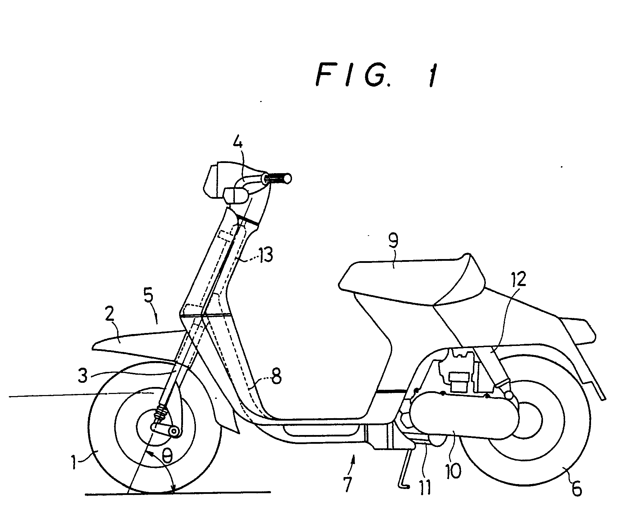

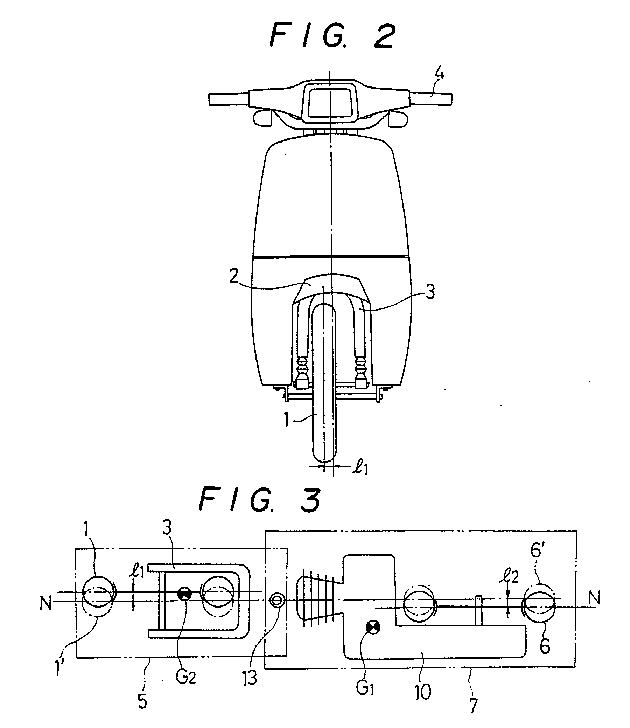

Referring first to Figures 1 and 2, designated by reference character 1 is a front wheel of the two-wheeled vehicle. The front wheel 1 is supported by the lower end of a front fork 3 provided with a front mudguard 2, the front fork 3 having at the upper end thereof a handlebar 4 connected thereto. The front fork 3 and the handlebar 4 constitute a steering assembly 5 that supports the front wheel 1. This steering assembly 5 is pivotably connected to a body assembly 7 that supports a rear wheel 6 and which includes a vehicle frame 8, a rider's seat 9, a power unit 10 and other members.

The power unit 10, which consists of an engine united with a case incorporating transmission members such as a chain for transmitting the power of the engine to the rear wheel 6, is connected by means of a connection member 11 and a damper 12 to the vehicle frame 8, while supporting at the rear end thereof the rear wheel 6. At the front end of the vehicle frame 8 there is secured a head pipe 13 having the front fork 3 transversely turnably provided therethrough. In this way the steering assembly 5 is transversely turnably pivoted on, and thus connected to, the body assembly 7 so as to be capable of steering operation.

The head pipe 13 and the front fork 3 have their common axis rearwardly inclined, thereby providing the front fork 3 with a caster angle $\theta$ relative to a horizontal road surface.

Referring now to Figure 3, designated at N—N is a fore and aft vehicle centre line extending longitudinally of the two-wheeled vehicle and thus passing through the head pipe 13 and respective positions of imaginary front and rear wheels 1', 6' not offset from this centre line. It will be appreciated that the centre line runs in the direction of straight-ahead running of the vehicle. In the present vehicle the power unit 10 is disposed in the main on one side of the rear wheel 6 and, therefore, the body assembly 7 has its centre of gravity $G_1$ offset from the vehicle centre line N—N to the same side as the main part of the power unit 10. As a result, the body assembly 7 has a falling moment produced by the offsetting of the centre of gravity $G_1$ from the vehicle centre line N—N, to the left in the vehicle illustrated, and the vehicle tends to incline in this direction.

To counteract the effect of the offset centre of gravity $G_1$, and produce upright straight-ahead running of the vehicle, the rear wheel 6 is offset from the vehicle centre line N—N to the same side as the position of the body assembly centre of gravity $G_1$ (that is to the left in the illustrated vehicle), by a distance such as to place the rear wheel 6 near or substantially on a line passing through the centre of gravity $G_1$ and parallel to the centre line N—N, thus rendering relatively small or substantially zero inclination of the vehicle during straight-ahead running. This offsetting of the rear wheel can be adopted without providing offsetting of the front wheel, but in the vehicle illustrated both wheels are offset, the front wheel by a distance $l_1$ from the vehicle centre line N—N on the side opposite the offset centre of gravity $G_1$, and the rear wheel 6 by a distance $l_2$ on the same side as the offset centre of gravity $G_1$.

In the illustrated vehicle the distance $l_1$, by which the front wheel is offset from the vehicle centre line N—N to the side opposite the offset position of the centre of gravity $G_1$ (to the right in the illustrated vehicle), is sufficient to have the result that the steering assembly 5 has its centre of gravity $G_2$ offset from the vehicle centre line N—N on the side opposite the offset centre of gravity $G_1$ of the body assembly 2, thus setting a moment due to the offset centre of gravity $G_2$ that opposes the falling moment of the body assembly result from the offset centre of gravity $G_1$.

## Claims

1. A two-wheeled vehicle comprising a body assembly (7) having its centre of gravity ($G_1$) offset to one side or the other of the fore and aft centre line (N—N) of the vehicle, a steering assembly (5) pivotably connected to the body assembly (7), a front wheel (1) supported by the steering assembly (5), and a rear wheel (6) supported by the vehicle body assembly (7); characterised in that the rear wheel (6) is offset with respect to said fore and aft centre line (N—N) on the same side as said centre of gravity ($G_1$).

2. A two-wheeled vehicle according to claim 1, wherein the front wheel (1) is offset with respect to said fore and aft centre line (N—N) on the side opposite said centre of gravity ($G_1$).

3. A two-wheeled vehicle as claimed in claim 1 or 2, wherein the body assembly (7) includes in its rear portion a power unit (10) disposed, in the main, on the same side as said centre of gravity ($G_1$) with respect to said fore and aft centre line (N—N).

4. A two-wheeled vehicle as claimed in claim 3, wherein the power unit (10) supports at the rear part thereof the rear wheel (6).

5. A two-wheeled vehicle as claimed in any one of claims 1 to 4, wherein the steering assembly (5) comprises a handlebar (4) and a front fork (3) operatively connected with the handlebar (4), the front fork (3) supporting at the lower part thereof the front wheel (1).

6. A two-wheeled vehicle as claimed in claim 5, wherein the front fork (3) has its axis of turning inclined rearwardly.

7. A two-wheeled vehicle as claimed in claim 5 or 6, wherein the body assembly (5) has at the front end thereof a head pipe (13) secured thereto and the front fork (3) being turnably provided through the head pipe (13).

## Patentansprüche

1. Zweirädriges Fahrzeug mit einem mit seinem Schwerpunkt ($G_1$) nach der einen oder nach der anderen Seite der Längsmittellinie (N—N) des Fahrzeugs versetzten Rumpfaufbau (7), einem mit dem Rumpfaufbau (7) schwenkbar verbundenen Lenkaufbau (5), einem vom Lenkaufbau (5) abgestützten Vorderrad (1) und einem vom Rumpfaufbau (7) abgestützen Hinterrad (6), dadurch gekennzeichnet, daß das Hinterrad (6) nach der gleichen Seite der Längsmittellinie (N—N) versetzt ist wie der Schwerpunkt ($G_1$).

2. Zweirädriges Fahrzeug nach Anspruch 1, worin das Vorderrad (1) nach der dem Schwerpunkt ($G_1$) gegenüberliegenden Seite der Längsmittellinie (N—N) versetzt ist.

3. Zweirädriges Fahrzeug nach Anspruch 1 oder 2, worin der Rumpfaufbau (7) in seinem hinteren Teil eine der Hauptsache nach an der gleichen Seite der Längsmittellinie (N—N) wie der Schwerpunkt ($G_1$) angeordnete Antriebseinheit (10) aufweist.

4. Zweirädriges Fahrzeug nach Anspruch 3, worin die Antriebseinheit (10) das Hinterrad (6) an ihren hinteren Teil abstützt.

5. Zweirädriges Fahrzeug nach irgendeinem der Ansprüche 1 bis 4, worin der Lenkaufbau (5) eine Lenkstange (4) und eine mit der Lenkstange (4) bedienungsmäßig verbundene Vordergabel (3) aufweist, wobei die Vordergabel (3) das Vorderrad (1) mit ihrem unteren Teil abstützt.

6. Zweirädriges Fahrzeug nach Anspruch 5, worin die Vordergabel (3) eine nach hinten geneigte Drehachse besitzt.

7. Zweirädriges Fahrzeug nach Abspruch 5 oder 6, worin der Rumpfaufbau (5) ein an seinem Vorderende festgelegtes Kopfrohr (13) aufweist und die Vordergabel (3) drehbar durch das kopfrohr (13) hindurchgeführt ist.

## Revendications

1. Véhicule deux roues, comprenant un châssis (7) dont le centre de gravité ($G_1$) est décalé vers l'un ou l'autre des côtés de la ligne centrale (N—N) passant par l'avant et l'arrière du véhicule, un mécanisme de braquage (5) relié au châssis (7) avec faculté de pivotement, une roue avant (1) supportée par le mécanisme de braquage (5), et une roue arrière (6) supportée par le châssis (7) du véhicule; caractérisé par le fait que la roue arrière (6) est décalée, par rapport à ladite ligne centrale (N—N) passant par l'avant et l'arrière, du même côté que ledit centre de gravité ($G_1$).

2. Véhicule deux roues selon la revendication 1, dans lequel la roue avant (1) est décalée, par rapport à ladite ligne centrale (N—N) passant par l'avant et l'arrière, du côté opposé audit centre de gravité (G$_1$).

3. Véhicule deux roues selon la revendication 1 ou 2, dans lequel le châssis (7) présente, dans sa partie postérieure, un groupe propulseur (10) principalement disposé du même côté que ledit centre de gravité (G$_1$), par rapport à ladite ligne centrale (N—N) passant par l'avant et l'arrière.

4. Véhicule deux roues selon la revendication 3, dans lequel le groupe propulseur (10) supporte la roue arrière (6) dans sa partie postérieure.

5. Véhicule deux roues selon l'une quelconque des revendications 1 à 4, dans lequel le mécanisme de braquage (5) comprend un guidon (4) et une fourche frontale (3) en liaison efficace avec le guidon (4), la fourche frontale (3) supportant la roue avant (1) dans sa partie inférieure.

6. Véhicule deux roues selon la revendication 5, dans lequel l'axe de pivotement de la fourche frontale (3) est incliné vers l'arrière.

7. Véhicule deux roues selon la revendication 5 ou 6, dans lequel un tube frontal (13) est assujetti à l'extrémité antérieure du châssis (5), la fourche frontale (3) étant montée pivotante dans ce tube frontal (13).

# F I G. 1

# F I G. 2

# F I G. 3